# EUROPÄISCHE PATENTSCHRIFT

(11) **EP 1 106 404 B1**
(45) Veröffentlichungstag und Bekanntmachung des Hinweises auf die Patenterteilung: **09.06.2004**
(21) Anmeldenummer: 00125196.6
(22) Anmeldetag: 18.11.2000
(51) Int. Cl.: B60H 1/00

(54) **Anordnung zum Beheizen eines Fahrzeug-Innenraums**
Assembly for heating the interior of a motor vehicle
Agencement pour chauffer l'habitacle d'un véhicule automobile

(30) Priorität: 30.11.1999 DE 19957629
(43) Veröffentlichungstag der Anmeldung: 13.06.2001
(73) Patentinhaber: Webasto Thermosysteme International GmbH, 82131 Stockdorf (DE)
(72) Erfinder: Herta, Magnus, 82140 Olching (DE)
(74) Vertreter: Wiese, Gerhard

(56) Entgegenhaltungen:
- DE-A- 3 149 252
- DE-A- 19 725 651
- PATENT ABSTRACTS OF JAPAN vol. 010, no. 025 (M-450), 31. Januar 1986 (1986-01-31) & JP 60 183218 A (NIPPON DENSO KK), 18. September 1985 (1985-09-18)

## Beschreibung

Die Erfindung betrifft eine Anordnung zum Beheizen eines Fahrzeug-Innenraums, insbesondere einer Lastwagen-Fahrerkabine, eines Bus-Innenraums oder einer Fahrgastzelle eines Personenkraftfahrzeugs, mit einer Belüftungseinrichtung zum Ansaugen von Frischluft über einen Frischluft-Ansaugbereich und Austragen von Luft in den Innenraum, mit einem Heizgerät zum Heizen von Luft, und mit einer Warmluftleitung zum Leiten von durch das Heizgerät erwärmter Luft in die Belüftungseinrichtung.

Bei herkömmlichen Anordnungen dieser Art ist das Heizgerät mit seiner Warmluftleitung unmittelbar mit der Belüftungseinrichtung verbunden, d.h., die vom Heizgerät zugeführte Luft beaufschlagt unmittelbar das Material, aus welchem die Einzelteile der Belüftungseinrichtung bestehen, so dass hitzebeständiges Material eingesetzt werden muss, weil die vom Heizgerät gelieferte Warmluft typischerweise eine Temperatur zwischen 120 und 130°C besitzt. Trotzdem besteht die Gefahr, dass die angeblasenen Bestandteile, typischerweise Kunststoffteile der Belüftungeinrichtung, durch eine derart hohe Wärmebelastung bersten oder schmelzen. Dies trifft grundsätzlich auch auf eine gefrorene Windschutzscheibe zu, die durch den hohen Temperaturunterschied zwischen Heizluft und Außenlufttemperatur bersten kann. Diese Probleme werden allenfalls durch entsprechende Zumischungen von Frischluft gemildert. Nachteilig ist jedenfalls, dass bei einer derartigen bekannten Anordnung aufgrund der Notwendigkeit, hitzebeständiges Material einsetzen zu müssen, die.

Herstellungskosten der Anordnung relativ hoch sind. Für eine derartige Anordnung wird ein Heizgerät benötigt, das einen relativ hohen Volumenstrom bereitstellen kann, um die Widerstände im Inneren der Belüftungseinrichtung überwinden zu können. Dies hat eine hohe Stromaufnahme des Heizgeräts und einen hohen Geräuschpegel durch Strömungsgeräusche in der Belüftungseinrichtung zur Folge.

Aus der DE 196 50 941 A1 ist eine Heiz- und Klimavorrichtung für Kraftfahrzeuge bekannt, bei der die aus der Warmluftleitung austretende Luft in den gebläsedruckseitigen Misch- bzw. Verteilraum geführt wird.

Aus Patent Abstracts of Japan, Vol. 10, no. 025 (M-450) in Verbindung mit der zugehörigen JP 60 183218 A ist eine Klimatisierungsvorrichtung bekannt, bei der ein Frischluftstrom in einen über einen Wasserwärmetauscher erwärmten Warmluftstrom und einen über einen Verdampfer einer Klimaanlage gekühlten Kaltluftstrom aufgeteilt und in einer einem Gebläse vorgeschalteten Mischkammer gemischt wird. Wasserwärmetauscher werden in einem Temperaturbereich bis maximal 90 Grad Celsius betrieben, so dass hier das Problem einer erhöhten Materialbeanspruchung durch die austretende Warmluft auch bei Verwendung eines Kunststoffgehäuses nicht auftritt. Die Warmluft wird außerdem nicht zwingend mit Frischluft gemeinsam angesaugt, da über eine in der Mischkammer angeordnete Verteilerklappe der Kaltluftstrom auch vollständig unterbunden werden kann.

Aus der DE 197 25 651 A1 ist eine Klimatisierungsvorrichtung bekannt, bei der im Eintrittsbereich Frischluft und Umluft über eine Umluftklappe gemischt einem mit Kühlwasser betriebenen Wärmetauscher und/oder anteilig einem Verdampfer einer Klimaanlage zugeführt werden. Auch hier liegt die Austrittstemperatur der Warmluft hinter dem Wärmetauscher bei maximal 90 Grad Celsius und eine Mischung der Warmluft mit Frischluft erfolgt je nach Klappenstellung nicht zwangsweise.

Angesichts dieses Standes der Technik besteht eine Aufgabe der vorliegenden Erfindung darin, eine Anordnung der eingangs bekannten Art zu schaffen, die im Bereich der Belüftungseinrichtung kostengünstig herstellbar und kostengünstig betreibbar ist und aufgrund niedrigen Geräuschpegels hohen Komfort bietet.

Gelöst wird diese Aufgabe durch die Merkmale des Anspruchs 1. Vorteilhafte Weiterbildung in der Erfindung sind in den Unteransprüchen der Erfindung angegeben.

Anstelle der mittelbaren Einleitung von Heizluft in die Belüftungseinrichtung beschreitet die Erfindung einen vollständig neuen Weg, indem sie eine Beaufschlagung der Bestandteile der Belüftungseinrichtung durch heiße Luft vermeidet, die entsprechend dem erfindungsgemäßen Vorschlag mittels der angesaugten Frischluft in die Belüftungseinrichtung eingetragen wird. Dadurch wird zum einen erreicht, dass die vom mit Brennstoff betriebenen Heizgerät bereitgestellte warme Luft durch Vormischung mit kalter Frischluft auf ein Temperaturniveau abgesenkt wird, welches für das Material der Bestandteile der Belüftungseinrichtung selbst dann unschädlich ist, wenn hierfür lediglich wärmeund nicht hitzebeständiges Material eingesetzt wird, mithin Material, welches typischerweise wärmebeständig ist bis ca. 60°C. Die Kostenvorteile durch die Verwendbarkeit von entsprechendem Kunststoffmaterial liegt auf der Hand. Zum anderen wird durch den erfindungsgemäßen Ansatz erreicht, dass warme Luft durch Einmischung von heißer Luft in die angesaugte Frischluft mit dieser zusammen durch die Belüftungseinrichtung gefördert wird, so dass das Heizgerät lediglich einen Volumenstrom bereitstellen muss, der hinreicht, warme Luft in den Frischluft-Ansaugbereich zu fördern. Durch Einsatz eines Luftheizgeräts mit geringer Volumenstromleistung wird eine Kosteneinsparung erzielt, während der Geräuschpegel in der Belüftungsanlage moderat gehalten werden kann.

Die erfindungsgemäße Anordnung ist aber auch deshalb kostengünstig realisierbar, weil es im einfachsten Fall ausreicht, die Warmluftleitung am Frischluftansaugbereich der Belüftungseinrichtung enden zu lassen, wo der aus der Warmluftleitung austretende Warmluftstrom vom Heizgerät zusammen mit der Frischluft eingesaugt wird.

Durch Einsatz einfacher Mittel ist es darüber hinausgehend jedoch möglich, den Komfort bei der Heizung des Fahrzeug-Innenraums mittels der erfindungsgemäßen Konfiguration zu erhöhen, indem das Mischungsverhältnis zwischen Frischluft und Warmluft im Frischluft-Ansaugbereich gesteuert wird. Hierzu kommt vorteilhafterweise eine einfach aufgebaute Warm/Frischluft-Mischeinrichtung in Betracht, die beispielsweise durch Änderung des Austrittsquerschnitts der Warmluftleitung und/oder eines Ansaugkanals für Frischluft eine Temperatureinstellung für die in den Fahrzeug-Innenraum eingetragene Heizluft ermöglicht. Vorteilhafterweise sieht die Erfindung diesbezüglich vor, dass die Mischeinrichtung eine Frischluftansaugkammer mit zumindest einer Frischluftansaugöffnung und eine Warmluftansaugkammer umfasst, in welche die Warmluftleitung mündet und welche über zumindest eine Verbindungsöffnung mit einstellbarem Öffnungsquerschnitt in Verbindung mit der Frischluftansaugkammer steht. Die Frischluftansaugkammer kann aus kostengünstigen Materialien, beispielsweise wärmebeständigem (jedoch nicht hitzebeständigem) Kunststoff hergestellt werden, während die Warmluftansaugkammer vorteilhafterweise aus hitzebeständigem Kunststoffmaterial oder Blech hergestellt ist.

Nachfolgend wird die Erfindung anhand der Zeichnungen beispielhaft näher erläutert; es zeigt:
- Fig. 1: schematisch den grundsätzlichen Aufbau der erfindungsgemäßen Anordnung zum Beheizen eines Fahrzeug-Innenraums,
- Fig. 2: eine Ausführungsform der Anordnung von Fig. 1 zum Beheizen des Innenraums eines Nutzfahrzeugs, beispielsweise eines Omnibusses, und
- Fig.3: eine Variante zu Fig.1

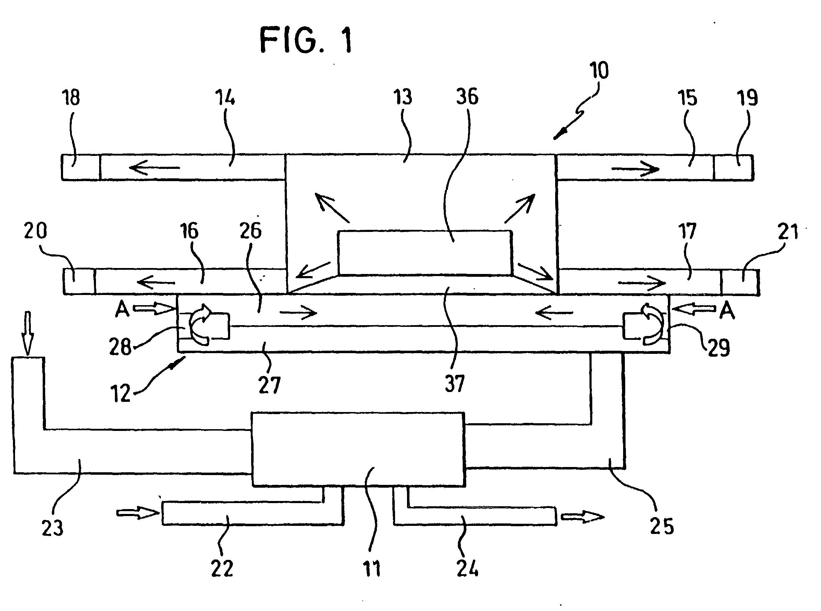

Wie aus Fig. 1 hervorgeht, besteht die Anordnung zum Beheizen eines Fahrzeug-Innenraums aus einer an sich bekannten Belüftungseinrichtung 10 für den Innenraum, einem Heizgerät 11 zum Heizen von Luft und einer Mischeinrichtung 12 zum Mischen der vom Heizgerät 11 gelieferten Warmluft mit Frischluft vor dem Ansaugen dieses Gemischs in die Belüftungseinrichtung 10. Diese Anordnung ist im einzelnen wie folgt aufgebaut.

Die Belüftungseinrichtung 10 umfasst ein Gehäuse 13, in welchem ein Fahrzeuglüfter 36 als Gebläse angeordnet ist, welcher Luft an der Unterseite des Gehäuses 13 in dessen Ansaugbereich 37 ansaugt und über mehrere Verbindungskanäle 14, 15, 16 und 17 zu Ausströmdüsen 18, 19, 20 und 21 fördert. Typischerweise befinden sich die Düsen 18, 19 in Höhe des Gesichtsbereichs eines Fahrers bzw. von Fahrgästen und/oder auf Höhe des Unterrands der Windschutzscheibe, während die Düsen 20, 21 Luft in den Fußraum des Fahrzeug-Innenraums liefern. Typischerweise ist der Ansaugbereich an der Unterseite des Gehäuses 13 als relativ großflächiger offener Bodenbereich des Gehäuses 13 gebildet.

Das Heizgerät 11 wird über eine Brennstoffleitung 22 mit Brennstoff versorgt, der in an sich bekannter Weise im Heizgerät 11 mit Ansaugluft gemischt und verbrannt wird, welche über eine Zuleitung 23 dem Heizgerät 11 zugeführt wird. Beim Verbrennungsprozess entstehendes Abgas wird über eine Abgasleitung 24 abgeführt. Am Auslass des Heizgeräts 11, an welchem Heizluft zur Verfügung steht, ist eine Warmluftleitung 25 angeschlossen, die warme Luft zur Belüftungseinrichtung 10 überführt. Bei einer gemäß dem Stand der Technik ausgebildeten Anordnung mündet die Warmluftleitung 25 unmittelbar in das Gehäuse der Belüftungseinrichtung 10 ein, so dass diese sehr heiße Luft mit einer Temperatur typischerweise zwischen 120 und 130°C direkt in Kontakt mit dem Material von Bestandteilen des Gehäuses 13 gelangt, so dass dieses Material aus hitzebeständigem Werkstoff hergestellt werden muss. Dieser Nachteil wird durch die Erfindung überwunden, indem keine direkte Zufuhr von heißer Warmluft in die Belüftungseinrichtung 10 vorgesehen ist. Vielmehr wird die Warmluft vom Heizgerät 11 nicht in das Gehäuse der Belüftungseinrichtung 10, sondern lediglich bis zu dessen bodenseitigem Ansaugbereich gefördert, tritt also außerhalb des Gehäuses 13 aus der Warmluftleitung 25 aus und wird dort zusammen mit der durch das Gebläse im Gehäuse 13 angesaugten Frischluft in die Belüftungseinrichtung 10 eingetragen. Eine unmittelbare Beaufschlagung von Bestandteilen des Gehäuses 13 der Belüftungseinrichtung 10 sowie übriger Bestandteile derselben mit heißer Luft tritt dadurch nicht auf, so dass entsprechend kostengünstiges Material für diese Bestandteile eingesetzt werden kann, nämlich Material, das nicht hitzebeständig, sondern lediglich wärmebeständig ist, um den moderat warmen Mischluftstrom zu den Ausströmdüsen 18 bis 21 zu fördern.

Während es grundsätzlich ausreicht, die Warmluftleitung 25 im Ansaugbereich der Belüftungseinrichtung 10 enden zu lassen, ist im Ansaugbereich bevorzugt die Mischeinrichtung 12 vorgeschaltet, die sich aus einer unmittelbar sich an den Ansaugbereich anschließenden und zu diesem offenen Frischluftansaugkammer 26 und einer Warmluftansaugkammer 27 zusammensetzt, welche auf der Unterseite der Frischluftansaugkammer 26, dem Ansaugbereich 37 gegenüberliegend angeordnet ist. An den beiden Außenrändern stehen die Frischluftansaugkammer 26 und die Warmluftansaugkammer 27 miteinander in Verbindung, und zwar über Verbindungsöffnungen 28 und 29, deren Öffnungsquerschnitt bevorzugt regelbar ist. Die Frischluftansaugkammer 26 ist außerdem an ihren Außenrändern offen und diese offenen Bereiche dienen als Ansaugöffnungen für Frischluft, wie durch Pfeile A schematisch dargestellt. Die Warmluftansaugkammer 27 hingegen ist bis auf die Verbindungsöffnungen 28 und 29 allseitig geschlossen und die Warmluftleitung 25 mündet in die Warmluftansaugkammer 27. Durch diese Konfiguration wird erreicht, dass das Gebläse 36 in das Gehäuse 13 Frischluft über die randseitigen Öffnungen der Warmluftansaugkammer 27 ansaugt, die ihrerseits über die Warmluftleitung 25 in die Warmluftansaugkammer 27 durch das Heizgerät 11 geförderte Warmluft mitreißt, wobei das Mischverhältnis und damit die Temperatur der in das Gehäuse 13 der Belüftungseinrichtung 10 aus der Mischeinrichtung 12 gesaugten Luft bestimmt ist durch den jeweiligen Querschnitt der Verbindungsöffnungen 28, 29 zwischen den beiden Kammern 26, 27.

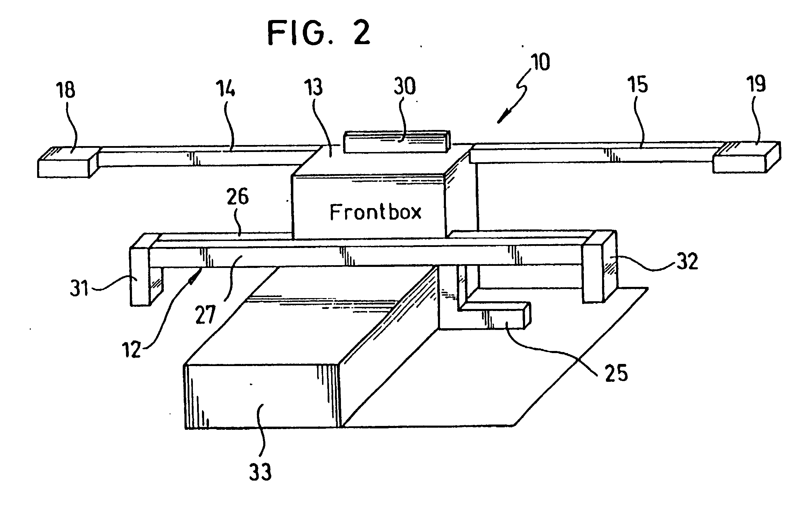

Fig. 2 zeigt die in Fig. 1 schematisch dargestellte Anordnung mehr im Detail angewendet auf den Innenraum eines Nutzfahrzeugs, beispielsweise eines Omnibusses, der im Innenraum an der vorderen Stirnseite einen Mitteltunnel 33 aufweist, auf welchem die Belüftungseinrichtung 10 aufgebaut ist. Das Gehäuse 13 der Belüftungseinrichtung 10 hat die Gestalt einer Frontbox, in welcher der Fahrzeuglüfter und ggf. auch Bestandteile einer Klimaanlage enthalten sind. Am unteren Ende weist auch diese Frontbox den Ansaugbereich auf, aus welchem das in der Frontbox angeordnete Gebläse Luft ansaugt und über Ausströmdüsen austrägt, von denen die Ausströmdüse 18 und die Ausströmdüse 19 der Anlage von Fig. 1 angeordnet sind. Im übrigen sind für gleiche Teile wie in Fig. 1 dieselben Bezugsziffem verwendet. Auf der Frontbox ist zusätzlich eine Entfrosterdüse 30 angeordnet, die zum Abtauen bzw. Entfrosten der Windschutzscheibe des Fahrzeugs dient.

Die Frischluftansaugkammer 26 gemäß Fig. 1 ist bei der Ausführungsform von Fig. 2 durch einen Luftansaugkanal gebildet, der durch den Fahrzeug-Innenraum verläuft und stirnseitige Öffnungen dieses Kanals stehen mit stirnseitigen Verbindungsöffnungen der Warmluftansaugkammer 27, die ebenfalls in Kanalform gebildet ist, über Mischkanäle 31 und 32 in Verbindung, in denen ggf. Klappeneinrichtungen zur Einstellung des Mischverhältnisses von Frischluft und Warmluft angeordnet sind, die von dem in Fig. 2 nicht gezeigten Heizgerät mittels der Warmluftleitung 25 der Warmluftansaugkammer 27 von der Unterseite im Bereich des Mitteltunnels zugeführt wird. Die Funktion hinsichtlich der Warmlufteintragung durch Ansaugung von Warmluft über den Frischluft-Ansaugbereich ist bei dieser Ausführungsform dieselbe wie in Fig. 1.

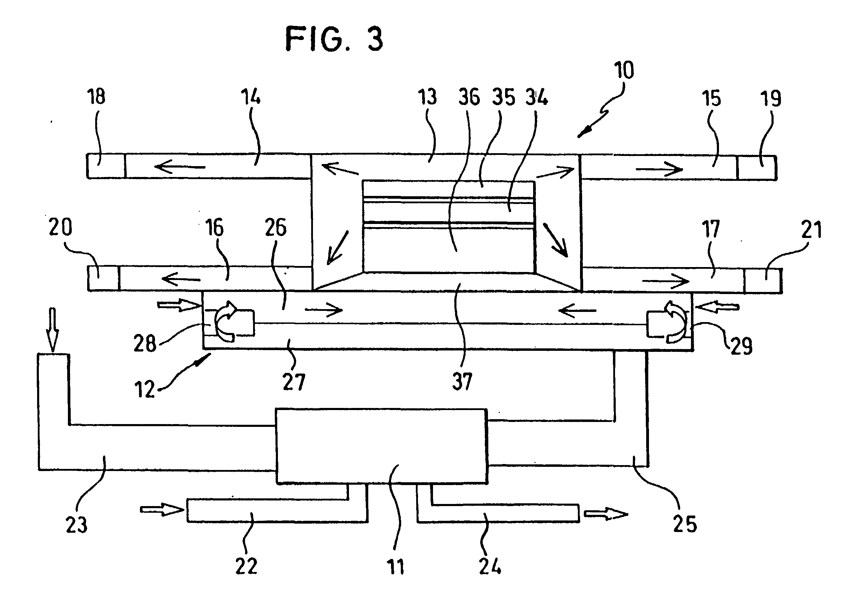

Bei der in Fig. 3 gezeigten Variante sind zusätzlich in dem der Fahrzeug-Luftführung dienenden Gehäuse 13 auf der Druckseite des Fahrzeuglüfters 36 ein erster Wärmetauscher 34 und ein zweiter Wärmetauscher 35 angeordnet. Im gezeigten Ausführungsbeispiel ist dabei der Wärmetauscher 34 vom Kühlwasser der Fahrzeugmotors durchströmt und ermöglicht somit optional eine zusätzliche Beheizung der Luft vor dem Eintritt in den Fahrzeuginnenraum über die Verbindungskanäle 14 bis 17. Der Wärmetauscher 34 kann aber auch durch eine andere Wärmequelle, beispielsweise eine elektrische Heizvorrichtung ersetzt werden, so dass beispielsweise ein Heizdefizit des Heizgeräts 11 ausgeglichen werden kann.

Der Wärmetauscher 35 ist beispielsweise als Verdampfer einer Klimaanlage ausgebildet und ermöglicht eine Abkühlung der Luft vor der Weiterleitung in den Fahrzeuginnenraum. Der Wärmetauscher 34 und der Verdampfer 35 können auch in umgekehrter Reihenfolge auf der Druckseite oder auch auf der Saugseite des Fahrzeuggebläses 36 angeordnet sein, so dass zuerst eine Abkühlung der Luft zum Entfeuchten mit einem anschließenden Wiedererwärmen möglich wird (Reheat-Betrieb).

### Bezugszeichenliste

- 10: Belüftungseinrichtung
- 11: Heizgerät
- 12: Mischeinrichtung
- 13: Gehäuse
- 14: Verbindungskanal
- 15: Verbindungskanal
- 16: Verbindungskanal
- 17: Verbindungskanal
- 18: Düse
- 19: Düse
- 20: Düse
- 21: Düse
- 22: Brennstoffleitung
- 23: Zuleitung
- 24: Abgasleitung
- 25: Warmluftleitung
- 26: Frischluftansaugkammer
- 27: Warmluftansaugkammer
- 28: Verbindungsöffnung
- 29: Verbindungsöffnung
- 30: Entfrosterdüse
- 31: Mischkanal
- 32: Mischkanal
- 33: Mitteltunnel
- 34: Wärmetauscher
- 35: Verdampfer
- 36: Fahrzeuglüfter
- 37: Ansaugbereich

## Patentansprüche

1. Anordnung zum Beheizen eines Fahrzeug-Innenraums, insbesondere einer Lastwagen-Fahrerkabine, eines Bus-Innenraums oder einer Fahrgastzelle eines Personenkraftfahrzeugs, mit einer Belüftungseinrichtung (10) zum Ansaugen von Frischluft über einen Frischluft-Ansaugbereich (26) und zum Austragen von Luft in den Innenraum, mit einem Heizgerät (11) zum Heizen von Luft, und mit einer Warmluftleitung (25) zum Leiten von durch das Heizgerät (11) erwärmter Luft in die Belüftungseinrichtung (10), **dadurch gekennzeichnet, daß** das Heizgerät (11) ein mit Brennstoff betriebenes Heizgerät ist und daß die Warmluftleitung (25) derart in den Frischluft-Ansaugbereich (26) geführt ist, daß die aus der Warmluftleitung (25) austretende geheizte Luft gemeinsam mit der Frischluft von einem stromabwärts des Frischluft-Ansaugbereichs (26) im Bereich der Belüftungseinrichtung (10) angeordneten Gebläse (36) in die Belüftungseinrichtung (10) gesaugt wird.

2. Anordnung nach Anspruch 1, **dadurch gekennzeichnet, daß** dem Ansaugbereich der Belüftungseinrichtung (10) eine Warm/Frischluft-Mischeinrichtung (26, 27) vorgeschaltet ist.

3. Anordnung nach Anspruch 2, **dadurch gekennzeichnet, daß** die Mischeinrichtung (26, 27) eine Frischluftansaugkammer (26) mit zumindest einer Frischluftansaugöffnung und eine Warmluftansaugkammer (27) umfaßt, in welche die Warmluftleitung (25) mündet und welche über zumindest eine Verbindungsöffnung (28, 29) mit einstellbarem Öffnungsquerschnitt in Verbindung mit der Frischluftansaugkammer (26) steht.

4. Anordnung nach einem der vorhergehenden Ansprüche, **dadurch gekennzeichnet, daß** der Ansaugbereich (26) von der Saugseite eines Fahrzeuglüfters (36) gebildet wird.

5. Anordnung nach Anspruch 4, **dadurch gekennzeichnet, daß** sich an den Fahrzeuglüfter (36) druckseitig ein Wärmetauscher (34) anschließt.

6. Anordnung nach Anspruch 5, **dadurch gekennzeichnet, daß** der Wärmetauscher (34) von Kühlwasser des Fahrzeug- Motors durchströmt wird.

7. Anordnung nach einem der Ansprüche 4 bis 6, **dadurch gekennzeichnet, daß** sich an den Fahrzeuglüfter (36) druckseitig ein weiterer Wärmetauscher (35) anschließt.

8. Anordnung nach Anspruch 7, **dadurch gekennzeichnet, daß** der weitere Wärmetauscher (35) von einem Verdampfer einer Klimaanlage gebildet wird.

## Claims

1. Arrangement for heating a motor vehicle interior, in particular a truck-driver's cab, a bus interior or a passenger compartment of a passenger car, comprising a ventilation device (10) for taking in fresh air via a fresh air intake area (26) and for discharging air into the interior, a heating device (11) for heating air, and a warm air line (25) for conducting air which has been heated by the heating device (11) into the ventilation device (10), **characterized in that** the heating device (11) is a heating device operated with fuel, and **in that** the warm air line (25) is led into the fresh air intake area (26) in such a way that the heated air emerging from the warm air line (25) is taken into the ventilation device (10) together with the fresh air by a blower (36) arranged downstream of the fresh air intake area (26) in the region of the ventilation device (10).

2. Arrangement according to Claim 1, **characterized in that** a warm/fresh air mixing device (26, 27) is connected upstream of the intake area of the ventilation device (10).

3. Arrangement according to Claim 2, **characterized in that** the mixing device (26, 27) comprises a fresh air intake chamber (26) with at least one fresh air intake opening and a warm air intake chamber (27), into which the warm air line (25) opens and which is connected to the fresh air intake chamber (26) via at least one connecting opening (28, 29) having an adjustable opening cross section.

4. Arrangement according to one of the preceding claims, **characterized in that** the intake area (26) is formed by the intake side of a motor vehicle fan (36).

5. Arrangement according to Claim 4, **characterized in that** a heat exchanger (34) is connected to the pressure side of the motor vehicle fan (36).

6. Arrangement according to Claim 5, **characterized in that** motor vehicle engine coolant flows through the heat exchanger (34).

7. Arrangement according to one of Claims 4 to 6, **characterized in that** a further heat exchanger (35) is connected to the pressure side of the motor vehicle fan (36).

8. Arrangement according to Claim 7, **characterized in that** the further heat exchanger (35) is formed by an evaporator of an air conditioning system.

## Revendications

1. Agencement pour chauffer l'habitacle d'un véhicule automobile, notamment la cabine de conduite d'un camion, l'habitacle d'un autobus ou le compartiment pour passagers d'une voiture particulière, avec un équipement de ventilation (10) pour aspirer de l'air frais par l'intermédiaire d'une zone (26) d'aspiration d'air frais et pour délivrer de l'air dans l'habitacle, avec un appareil de chauffage (11) pour chauffer de l'air, et avec une conduite d'air chaud (25) pour diriger l'air chauffé par l'appareil de chauffage (11) dans l'équipement de ventilation, **caractérisé en ce que** l'appareil de chauffage (11) est un appareil de chauffage fonctionnant avec du combustible, et **en ce que** la conduite d'air chaud (25) est dirigée dans la zone (26) d'aspiration d'air frais de telle sorte que l'air chauffé sortant de la conduite d'air chaud (25) est aspiré conjointement avec l'air frais dans l'équipement de ventilation (10) par une soufflante (36) disposée en aval de la zone (26) d'aspiration d'air frais dans la région de l'équipement de ventilation (10).

2. Agencement selon la revendication 1, **caractérisé en ce qu'**un équipement (26, 27) mélangeur d'air chaud et d'air frais est monté en amont de la zone d'aspiration de l'équipement de ventilation (10).

3. Agencement selon la revendication 2, **caractérisé en ce que** l'équipement mélangeur (26, 27) comprend une chambre (26) d'aspiration d'air frais dotée d'au moins une ouverture d'aspiration d'air frais, et une chambre (27) d'aspiration d'air chaud dans laquelle débouche la conduite d'air chaud (25) et qui communique avec la chambre (26) d'aspiration d'air frais par l'intermédiaire d'au moins une ouverture de communication (28, 29) à section d'ouverture réglable.

4. Agencement selon l'une des revendications précédentes, **caractérisé en ce que** la région d'aspiration (26) est formée par le côté d'aspiration d'un ventilateur (36) du véhicule.

5. Agencement selon la revendication 4, **caractérisé en ce qu'**un échangeur de chaleur (34) se raccorde côté refoulement au ventilateur (36) du véhicule.

6. Agencement selon la revendication 5, **caractérisé en ce que** l'échangeur de chaleur (34) est traversé par de l'eau de refroidissement du moteur du véhicule.

7. Agencement selon l'une des revendications 4 à 6, **caractérisé en ce qu'**un autre échangeur de chaleur (35) se raccorde côté refoulement au ventilateur (36) du véhicule.

8. Agencement selon la revendication 7, **caractérisé en ce que** l'autre échangeur de chaleur (35) est formé par un évaporateur d'un système de climatisation.
